# EUROPEAN PATENT SPECIFICATION

(11) **EP 0 851 562 B1**
(45) Date of publication and mention of the grant of the patent: **13.03.2002**
(21) Application number: 97830712.2
(22) Date of filing: 23.12.1997
(51) Int. Cl.: H02M 3/07

(54) **High voltage charge pump, particularly for flash EEPROM memories**
Hochspannungsladungspumpe,insbesondere für Flash-EEPROM-Speicher
Pompe de charge haute tension en particulier pour mémoires EEPROM flash

(30) Priority: 23.12.1996 IT RM960897
(43) Date of publication of application: 01.07.1998
(73) Proprietor: Texas Instruments Incorporated, Dallas, Texas 75251 (US); Consorzio Eagle, 67051 Avezzano (AQ) (IT)
(72) Inventor: Menichelli, Stefano, 00177 Roma (IT)
(74) Representative: Taliercio, Antonio

(56) References cited:
- EP-A- 0 720 170
- US-A- 5 168 174
- US-A- 5 414 614

## Description

This invention broadly relates to semiconductor memories and more particularly concerns a novel implementation of a voltage multiplier circuit that enables integrated circuits manufactured in CMOS technology to be operated under a standard supply voltage of 3.3 volts or 5.0 volts also in those cases in which higher voltages are required, generated within the circuit itself and in certain operation circumstances.

It is known, for instance, that, in EEPROM memories, besides the standard supply voltages of 5.0 or 3.3 volts, also higher voltages are utilized, for instance 12 volts or in other operation circumstances also 18 volts, in order to carry out programming operations of the memory cells or erasure operations. It is generally known that these memory devices require an additional supply arrangement, which entails some problems, due to the fact that obviously the need that two supply arrangements be provided rather than just one clearly cannot be considered as an advantage. The problem exists that a voltage higher than the supply voltage is to be provided on the same chip.

On-chip voltage multipliers, often referred to as "charge pumps", are typically utilized in order to enable integrated circuits to be operated from the standard power supply, although, as it occurs in Flash EEPROM memories, in certain operation modes, negative voltages and/or positive voltages higher than the standard power supply voltages are internally required.

As it is known to those skilled in the art, one of the issues to be always carefully kept into account in designing and implementing an integrated circuit is the utilization grade of the area of the silicon chip on which the integrated circuit is realized. From this view point, therefore, it should be kept into account that the silicon area needed to implement a charge pump circuit can noticeably vary depending on three primary factors: the supply voltage, the output requirements and the capacitance per unit area of the on-chip capacitors that are realized.

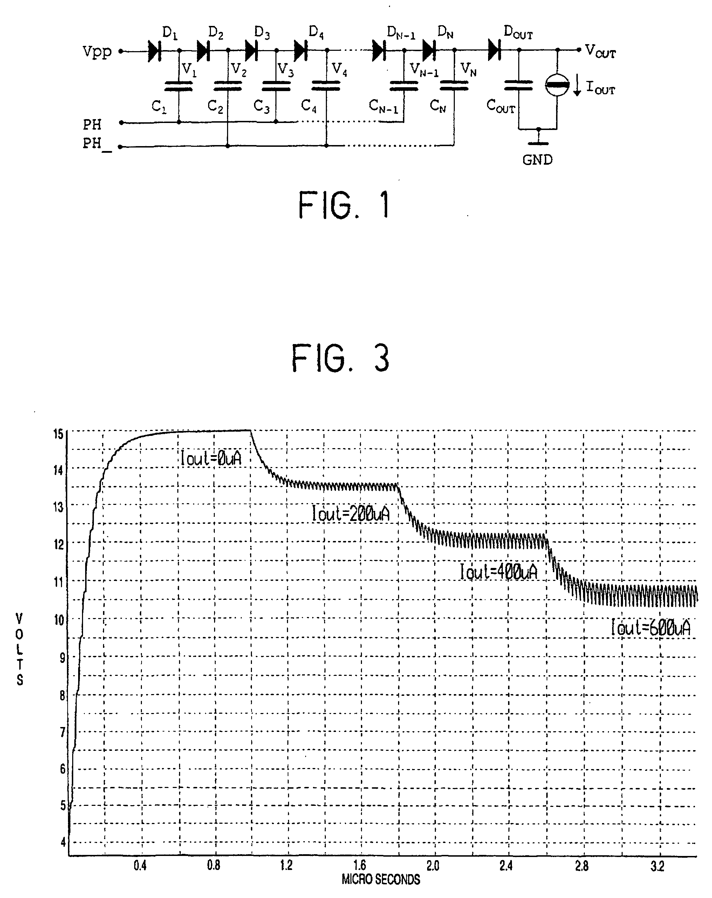

As a citation of the prior art, reference can be made to. Figure 1 which illustrates a schematically depicted conventional charge pump circuit. As it can be observed, it substantially includes a diode chain D₁, D₂, ... D_{N-1}, D_{N} plus an output diode D_{OUT} supplied by a supply voltage Vpp. The alternated nodes between the diodes of the chain are coupled to two clock signals PH and PH_ through capacitors C₁, C₃ ... C_{N-1} and C₄ ... C_{N}, respectively.

In this circuit, the charge packets are "pumped" along the chain diodes according to the charging and discharging steps of the coupling diodes under the alternated actions of the above mentioned two clock signals PH and PH_, which are of opposite phases, with amplitude Vpp.

As it is known, in CMOS technology, diodes are not available and the ones in the circuit of Figure 1 are typically replaced by NMOS or bipolar NPN transistors designed to operate as diodes. Although bipolar transistors are not standard devices in CMOS technology, some CMOS processes can include a set of steps that, even if designed and optimized in respect of other objects to be reached, can be "unproperly" but conveniently utilized to obtain bipolar transistors. It is clearly understood that any bipolar transistors obtained in this manner are not optimized and that their utilization is subject to many restrictions. In particular, they typically have a high collector resistance which is often associated with an undesired parasitic PNP transistor and jeopardizes their capability to effectively perform their operation as diodes at intermediate or high current values.

The performances of the circuit of Figure 1 are strictly correlated with the diode efficiency and with the power supply voltage. In standard CMOS technology, due to the voltage drop across the devices employed as diodes, the charge pump of Figure 1 exhibits, especially at low power supply voltages, a poor performance, in terms of both a voltage multiplication efficiency and a current drive capability. This practically occurs because, in a voltage multiplier circuit, high voltage MOS transistors are typically used. But it is known that high voltage MOS transistors have a very scarce capability to efficiently perform their desired diode function due to the high V_{T} value and to the low K_{P} value with respect to low voltage MOS transistors.

Furthermore, the output voltage tends to collapse when the output current increases above the maximum allowable value. Lastly, it should be noted that, in the concerned circuit, the capacitors have to stand subjected to high voltages across themselves and this is a drawback in terms of silicon area usage, as it will be subsequently described when the capability per unit area will be discussed with respect to the dielectric oxide layer thickness.

EP-A-0 720 170 discloses a voltage multiplier circuit for integrated circuits, comprising two mirrored sections driven by control signals generated by a logic circuitry which receives an input clock signal (PH), wherein each mirrored section includes N stages and each stage comprises a capacitor (C1, C2, ...; CN) having a lower terminal and an upper terminal, the upper terminal is connected to a first switch (D1, D2, ..., DN) that, in closed condition, couples the upper terminal of the capacitor to the power supply voltage (Udd), the lower terminal of the capacitor being additionally connected to a second switch (T1, T2, ..., TN) that, in closed condition, couples the lower terminal of the capacitor to power supply voltage (Udd), as far as the first stage is concerned, or to the lower terminal of the capacitor of the next stage, the lower terminal of the capacitor is connected to a third switch (S1, S2, ..., SN) that, in closed condition, couples the lower terminal of the capacitor to ground (Uss), the upper terminal of the capacitor of the last stage is connected to a last two-terminal switch (TN+1) that, in closed in condition, couples the upper terminal of the capacitor of the last stage to the output of the voltage multiplier; said control signals directly or indirectly drive said switches such that, at a rate determined by said clock signal, each mirrored section in alternated times is switched over from a charging phase to a discharging phase (see timing diagram), so that while a mirrored section is in charging phase, the other one is in discharging phase and vice versa; when a mirrored section of the circuit is charging phase, the last switch (TN+1) and all second switches (T1, ..., TN) thereof are in open condition, while its first (D1, ..., DN) and its third switches (S1, ..., SN) are in closed condition, so that all capacitors of this circuit section are parallel connected between the supply voltage (Udd) and ground (Uss) and are charged up to said supply voltage; when a mirrored section of the circuit is in discharging phase, all its first (D1, ..., DN) and third switches (S1, ..., SN) are in open condition, while its last switch (TN+1) and all its second switches (T1, ..., TN) are in closed condition, so that all capacitors are serially connected with one another, the lower terminal of the capacitor of the first stage being connected to the supply voltage (Udd) and the upper terminal of the capacitor of the N-th stage being connected to the output of the voltage multiplier.

In view of this prior art, it is a broad object of this invention to realize a charge pump circuit, implemented in CMOS technology, adapted to generate on-chip very high positive voltages, without the drawbacks and the complexities of the prior art approaches.

A further object of this invention is to realize a charge pump circuit as above said, which is also very flexible, as well as easily modifiable in order to fulfill any different and specific application requirements.

Additional objects of this invention are to realize a charge pump circuit as above said having a very high efficiency in terms of power, a very high current drive capability, as well as an efficient silicon area utilization.

The above mentioned objects are obtained by a circuit as above disclosed, wherein said logic circuitry further receives an enable signal (en) as an input signal; when the voltage multiplier is enabled (en = 1), the logic circuitry generates control signals such that each mirrored section in alternated times is switched over from a charging phase to a discharging phase a rate determined by said clock signal (clk); and when the voltage multiplier is disabled (en = 0), the logic circuitry generates control signals such that both mirrored sections of the circuit are in charging phase.

In the above set forth circuit, said two mirrored circuit sections are driven by a first and a second control signals, having opposite polarities; when the mirrored section is in charging phase, said first control signal is at ground, while said second control signal is at the power supply voltage; when the mirrored section is in discharging phase, said first control signal is at the power supply voltage, while said second control signal is at ground.

In the preferred embodiment, the first and the second switch of the first stage of each mirrored section are realized by means of a conventional CMOS inverter so that said first switch is realized by means of a N-channel MOS transistor, having the source region connected to ground, the drain region connected to the lower terminal of the first stage capacitor and the gate region connected to the line of said second control signal, said second switch is realized by a P-channel MOS transistor having the source region and the N-well in which the transistor is realized connected to the power supply voltage, the drain region connected to the lower terminal of the first stage capacitor and the gate region connected to the line of said second control signal.

Furthermore, all said first switches, except for the ones of the first stage of both mirrored sections, are realized by means of N-channel MOS transistors having their source region connected to the line of said first control signal, their drain region connected to the lower terminal of the capacitor and their gate region connected to the power supply voltage.

Again in the preferred embodiment, all said second switches, except for the ones of the first stage of both mirrored sections, are realized by means of P-channel MOS transistors having their source region and the N-well, in which the transistor is realized, connected to the upper terminal of the capacitor of the previous stage, their drain region connected to the lower terminal of the capacitor of their own stage and their gate region connected to the line of said second control signal.

Lastly, all said third switches are realized by means of N-channel MOS transistors, having their source region connected to the upper terminal of the capacitor, their drain region connected to the power supply voltage and their gate region connected to the upper terminal of one of the capacitors of the other mirrored section of the circuit so as to enable a suitable voltage to be picked off from the discharging section for application to the gate region of said MOS transistors in order to turn them fully on when they emulate a closed switch.

In the above described multiplier circuit, each stage further includes a diode having its anode connected to the power supply voltage and its cathode connected to the upper terminal of the capacitor in order to guarantee pre-charging of the capacitors when the voltage multiplier is disabled, said switches being in open condition due to the fact that they are realized by means of N-channel MOS transistors having their gate regions at a voltage not sufficient to turn them on because, since the voltage multiplier is disabled, both mirrored sections are in charging phase.

As it will be observed, said diodes are realized by means of N-channel MOS transistors, having their source region connected to the upper terminal of the capacitor and their drain and gate regions both connected to the power supply voltage, while said last switch is realized by means of a diode having its anode connected to the upper terminal of the capacitor of the last stage and its cathode connected to the output of the voltage multiplier.

Again in the preferred embodiment, said diode is realized by means of a bipolar NPN transistor connected as a diode, having its base and its collector coupled to each other and operating as anode and having its emitter operating as cathode.

Further details and advantages of this invention will be evident from the following specification by referring to the enclosed drawings wherein the preferred embodiment is shown by way of illustration and not by way of limitation.

In the drawings:
Figure 1 shows a charge pump circuit according to conventional technology,
Figure 2 shows a charge pump circuit of high voltage type according to this invention,
Figure 3 shows the output voltage V_{OUT} behaviour in the charge pump circuit of Figure 2.

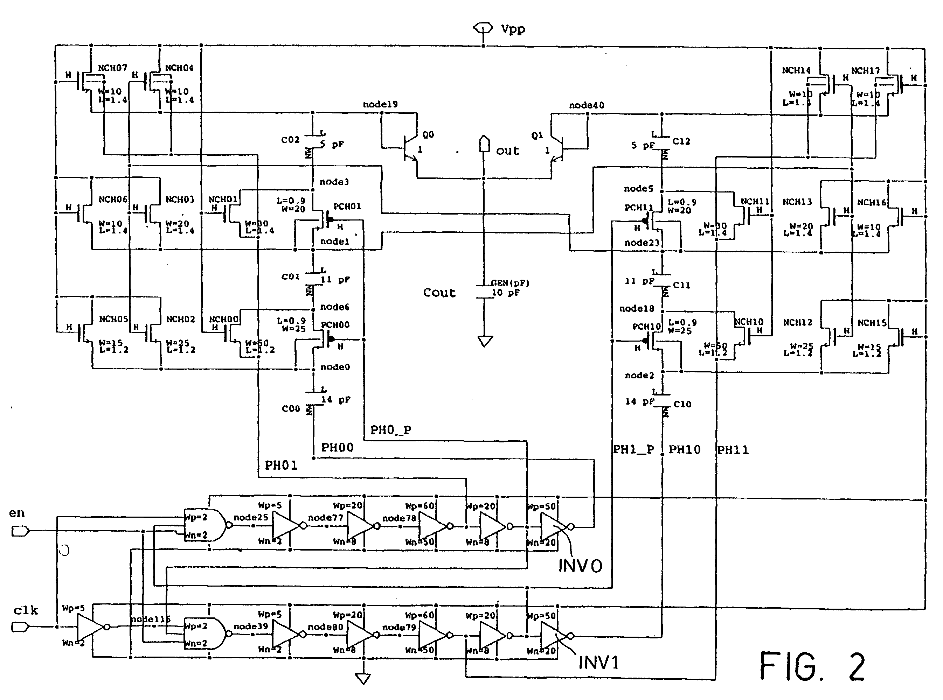

By referring now to Figure 2, a novel voltage multiplier circuit is schematically shown, positively designed to furnish a very high voltage multiplication efficiency and a great current drive capability. This circuit is intended to generate an output voltage as high as allowed by the process limits, at an output current which is limited only by the current that can be safely handled by a NPN type transistor used as a diode. As a matter of fact, it will be necessary to reduce to the maximum possible extent the overvoltages in the internal nodes of the circuit in order to prevent the breakdown and consequently the failure of the transistors. Therefore, since the output voltage is close to the breakdown voltage, the maximum circuit voltages should be clamped or limited to a value as close as possible to the output voltage.

This result can be efficiently achieved only by using NPN type transistors connected as diodes. In spite of the above mentioned drawback, this is neither a real limitation, nor an effective drawback for this type of circuit, since the function of bipolar transistors, as employed in the charge pump circuit of Figure 2, is solely to accommodate the output current that, in most cases, amounts to some hundreds µA's only.

The basic voltage multiplier structure is made of two mirrored parts which are clocked by not overlapping phases. The full symmetry of the circuit allows limiting the analysis to just one half of it and to refer to the other half circuit only to the necessary extent to explain all steps of the method. Each half section of the voltage multiplier comprises N stages: each stage is made of a capacitor and a few MOS transistors operating as switches. Said N capacitors are insulated from one another and charged in parallel to voltage Vpp during a phase of the clock signal, while, during the subsequent phase of the clock signal, said N capacitors are connected in series, to enable them to be directly discharged to the output. According to the clock signal, said N capacitors are insulated from each other and are connected together by means of PMOS transistors. During the charging phase, said N capacitors are insulated from each other and the two terminals of each capacitor are connected one to voltage Vpp and the other one to ground GND by means of NMOS transistors. During the discharge phase, said N capacitors are connected in series with the bottom plate of the first stage capacitor coupled to voltage Vpp and the top plate of the last stage capacitor coupled to the output through an NPN type transistor connected as diode.

The charge pump circuit of Figure 2 is particularly adapted for use in an embedded Flash EEPROM and it has been illustrated for the case N=3 and for providing an output voltage of 12 Volts.

The control signals are generated by logic gates that are shown in the bottom part of Figure 2 and effectively form a not-overlapping phase generator.

In wait or stand-by conditions, in which signal en is low, phases PH00, PH01, PH11 and PH10 are at ground GND, whereas phases PHO_P and PH1_P are at voltage Vpp. Capacitors C00, C01, C02, C10, C11 and C12 are charged to Vpp-Vd, where Vd is the voltage drop across the related NMOS transistor connected as a diode. In effect, considering any one of the capacitors, for instance C01, in stand-by mode, node 1 is held at Vpp-Vd by transistor NCH06 and node 6 is connected to ground GND by transistor NCH00 which is on because it has the gate region coupled to Vpp and because phase PH01 is low and, therefore, its drain region is at ground GND.

This means that, in stand-by mode, each capacitor C00, C01, C02 and C10, C11, C12 is pre-charged to Vpp-Vd.

In operating mode, enable signal en is high and clock signal clk is in free running condition. When it is assumed, as a starting point of the analysis, that the clock signal clk is low, then phases PH00, PH01 and PH1_P are at ground GND, while phases PHO_P, PH11 and PH10 are at voltage Vpp. In this case, the left side of the voltage multiplier circuit is in charging phase, while its right side is in discharging phase. In the left side of the voltage multiplier circuit, which is in charging phase, since phase PHO_P is at voltage Vpp, transistors PCH00 and PCH01 are off and capacitors C00, C01 and C02 are insulated from each other. Since phases PH00 and PH01 are at ground GND and node 23 is at a proper high voltage, as it will be evident hereinbelow, transistors NCH00, NCH01, NCH02, NCH03 and NCH04 are conductive or on, thereby fully charging capacitors C00, C01 and C02 to voltage Vpp.

In the right side of the voltage multiplier circuit, which is in discharging phase, since phase PH1_P is at ground GND, transistors PCH10 and PCH11 are on, consequently connecting capacitors C10, C11 and C12 in series. As phases PH10 and PH11 are at voltage Vpp and node 1 is at a voltage not higher than Vpp, since the left side of the circuit is in charging phase, then transistors NCH10, NCH11, NCH12, NCH13 and NCH14 are off. In fact, as far as transistors NCH10 and NCH11 are concerned, it can be observed that their gate regions are coupled to Vpp, but also their source regions are coupled to Vpp, since phase PH11 is at voltage Vpp, so that they have a gate-source voltage of null value. As far as transistors NCH12, NCH13 and NCH14 are concerned, it should be observed that node 1 is at Vpp and, therefore, the gate regions of transistors NCH12, NCH13, NCH14 are at Vpp, so that they are in the same conditions as transistors NCH10 and NCH11 and are off. The serially connected capacitors C10, C11 and C12 can be discharged to the output through bipolar NPN transistor Q1 used as diode.

When the clock signal clk switches from low to high, in the first place the phase voltages of PH11 and PH10 are switched to low, thereby switching transistors NCH10 and NCH11 on, while the phase voltage PH1_P becomes high, thereby switching transistors PCH10 and PCH11 off. The voltage upon node 23, which is the residual voltage on capacitor C11, decreases to a value not higher than voltage Vpp, so that transistors NCH02, NCH03 and NCH04 are switched off. In fact, these transistors were on thanks to the voltage on node 23, which by decreasing to a value not higher than Vpp, turns them off.

After the voltage of phase PH11 has gone low, phase PH01 becomes high, thereby pre-charging node 6 and node 3 through transistors NCH00 and NCH01 acting as diodes until they are turned off. This pre-charge improves the circuit performance, since parasitic capacitors are coupled to these nodes.

It is known, in fact, that, in MOS technology, a capacitor whose terminals can be driven to not negative voltages is typically realized by using a layer of polysilicon, as first terminal, on an underlying thin or thick layer of gate oxide of MOS transistors, as dielectric, which is laid on a N-type diffusion region (N-well), as a second plate. A N+diffusion, in the N-diffusion or N-well region, surrounds the polysilicon/oxide/N-well vertical structure, thereby decreasing the series resistance and allowing the contacts to the N well of the second capacitor terminal to be effected. The pn junction which forms between the N well and the P substrate is a parasitic capacitance, associated with the capacitor, whose value is a function of the N well voltage, since substrate P is typically connected to ground. This parasitic capacitance decreases as the voltage across the reverse biased pn junction increases. Thus, the very fast pre-charging of node 6, of node 3, of node 18 as well as of node 5, before the discharge phase is started, prevents a loss of the "useful" charge of the capacitors which would be used to charge the parasitic capacitors in the first voltage range in which they have their maximum capacitance value. Lastly, all capacitors built with a thin gate oxide of the MOS transistor, rather than with a thick gate oxide, have a much lower parasitic capacitance, since the value of the parasitic capacitance is proportional to the pn junction surface area.

It can be observed now, with continuous reference to the analysis of the circuit, that the PHO_P phase voltage becomes subsequently low, thereby turning transistors PCH00 and PCH01 on, the PH00 phase voltage becomes high and node 1 rises to a voltage given by Vpp plus the voltage across capacitors C00 and C01 minus the source-drain voltage of transistor PCH00. The voltage on node 1 switches transistors NCH12, NCH13 and NCH14 to a fully conductive state. At this time, the transitions in the circuit due to the clock signal clk are completed.

The left side of the voltage multiplier circuit is now in discharging phase, while its right side is in charging phase. As the circuit of Figure 2 is fully symmetrical, a perfectly analogous description of the circuit behaviour could be repeated to analyze the operation when the clock signal clk goes from high to low.

All the high voltage MOS transistors of the circuit of Figure 2 always switch in very safe conditions so as to prevent any risk of field plate breakdown, which is a typical breakdown risk occurring in transistors switching with high voltages across them. Assuming then that the CMOS process makes insulated NMOS transistors available, they can be employed to decrease the voltage across the more stressed pn junctions, as shown in Figure 2, where the insulated P wells of NMOS transistors NCH07, NCH04, NCH14 and NCH17 are properly driven.

As it is known, an insulated NMOS transistor is typically implemented by utilizing a deep N-well that contains a P-well in which the NMOS transistor is realized. The bulk of this type of NMOS transistor is insulated from the P-substrate by the deep N well and can be driven to different voltages, other than ground, provided that all pn junctions be never forwardly biased. For positive voltages, the P well can be short circuited to the deep N well and can rise to a positive voltage not higher than the drain or source voltage of the insulated NMOS transistor. However, insulated NMOS transistors are mainly designed to handle negative voltages. As a matter of fact, by coupling the deep N well to voltage Vpp or to ground GND, the source and drain regions of an insulated NMOS transistor can be driven to negative voltages, provided that such voltages be not lower than the P well voltage.

Some of the process steps aimed at building an insulated NMOS transistor can also be utilized to build a NPN type bipolar transistor. The collector of the NPN transistor is made by a deep N well that contains a P well, as base region, while the emitter is made by a N+diffusion within the P well. Due to the high sheet resistance of the deep N well, this NPN type transistor exhibits a high collector resistance. When the collector and base terminals are short circuited in order to accomplish the diode function, as the current increases, the voltage across the base-collector junction decreases, until the junction becomes forwardly biased, thereby turning the PNP type parasitic transistor on. As it is known to those skilled in the art, the PNP type parasitic transistor is made by the P well, the deep N well and by the P-substrate, which act as emitter, base and collector, respectively. Of course, when this PNP type parasitic transistor turns on, a relevant loss of current to ground occurs which severely impairs the diode functionality.

Unlike the circuit of Figure 1, in the novel voltage multiplier scheme according to this invention, the maximum voltage across each capacitor is only equal to the power supply voltage Vpp. This observation is very important from an efficient silicon area usage view point when, as it occurs in many cases, the capacitor dielectric is made by the MOS transistor gate oxide. In fact, the maximum allowed voltage across the gate oxide of a MOS transistor depends on the thickness of the gate oxide itself. Low voltage MOS transistors are made with a thin gate oxide which has a very high capacitance per unit area. In contrast, high voltage MOS transistors are made with thick gate oxide, because they have to withstand high voltages; however, a thick gate oxide, compared to a thin gate oxide, has a much lower capacitance per unit area.

The voltage multiplier according to the scheme of this invention allows a very thin gate oxide to be used for realizing the capacitors and this is a really noticeable advantage in terms of silicon area usage. In some effective embodiments of this invention (Epic3-Flash merged technology (33M12)), the thin gate oxide of the MOS transistor has a thickness of 8 nm and a capacitance per unit area of about 3.8 fF/µm², the thick gate oxide of the MOS transistor has a thickness of 21 nm and a capacitance per unit area of 1.0 fF/µm² The silicon area needed to build the same capacitor is more than twice larger if a thick MOS gate oxide is used instead of a thin MOS gate oxide.

The charge pump circuit of Figure 2 has been simulated by utilizing SPICE (Simulation Program with Integrated Circuit Emphasis) models, a clock period of 40 ns and a power supply voltage of 4 volts, furnished by a high current voltage regulator which is integrated with the embedded Flash EEPROM memory. The parasitic capacitance has been taken into account in the SPICE simulation by connecting an additional capacitor between the bottom plate of each capacitor and ground. Each parasitic capacitance has been estimated at 1.2% of the capacitor value which it is associated with. Furthermore, an ideal current source l_{OUT} has been inserted between the output and ground in order to emulate the load current The waveform of the output voltage V_{OUT} is shown in Figure 3. It shows that the high voltage charge pump of Figure 2 is equivalent to an ideal voltage generator of 15 V serially connected to a resistor of 7000 ohms. A voltage multiplier based upon this scheme is equivalent to an ideal voltage generator Vo with a serially connected resistor Ro the values of which, in the range of interest and with good approximation, are proportional to Vpp and to the clock period T, respectively, that is to say Vo ≃ α* Vpp and Ro ≃ β* T. The α and β coefficients depend on the circuit only. As it has been shown by the SPICE simulation, for an output current in the range 400 µA to 600 µA, the power efficiency is practically constant and equal to 54%, which is a very high value for a charge pump circuit.

The preferred embodiment has been described and some modifications have been suggested above, but it should be understood that those skilled in the art can make modifications and changes to the components without departing from the scope of this invention as defined in the attached claims.

## Claims

1. A voltage multiplier circuit for integrated circuits, including two mirrored sections driven by control signals (PH00, PH01, PH0_P; PH10, PH11, PH1_P) generated by a logic circuitry which receives a clock signal (clk) as an input signal, wherein each mirrored section includes N stages and each stage comprises a capacitor (C00, C01, C02; C10, C11, C12) having a lower terminal and an upper terminal, the lower terminal is connected to a first switch (INV0, NCH00, NCH01; INV1, NCH10, NCH11) that, in dosed condition, couples the lower terminal of the capacitor to ground (GND), said lower terminal of the capacitor being additionally connected to a second switch (INV0, PCH00, PCH01; INV1, PCH10, PCH11) that, in closed condition, couples the lower terminal of the capacitor to the supply voltage (Vpp), as far as the first stage is concerned, or to the upper terminal of the capacitor of the previous stage; the upper terminal of the capacitor is connected to a third switch (NCH02, NCH03, NCH04; NCH12, NCH13, NCH14) that, in dosed condition, couples the upper terminal of the capacitor to supply voltage (Vpp), the upper terminal of the capacitor (C02; C12) of the last stage is connected to a last two-terminal switch (Q0;Q1) that, in dosed condition, couples the upper terminal of the capacitor of the last stage to the output of the voltage multiplier; said control signals directly or indirectly drive said switches at a rate determined by said dock signal (clk), each mirrored section in alternated times is switched over from a charging phase to a discharging phase, so that while a mirrored section is in charging phase, the other one is in discharging phase and vice versa; when a mirrored section of the circuit is in charging phase, the last switch (Q0; Q1) and all second switches thereof (INV0, PCH00 PCH01; INV1, PCH10, PCH11) are in open condition, while its first (INV0, NCH00, NCH01; INV1, NCH10, NCH11) and its third switches (NCH02, NCH03, NCH04; NCH12, NCH13, NCH14) are in closed condition, so that all capacitors of this circuit section are parallel connected between the supply voltage (Vpp) and ground (GND) and are charged up to said supply voltage (Vpp); when a mirrored section of the circuit is in discharging phase, all its first (INV0, NCH00, NCH01; INV1, NCH10, NCH11) and third switches (NCH02, NCH03, NCH04; NCH12, NCH13, NCH14) are in open condition, while its last switch (Q0; Q1) and all its second switches (INV0, PCH00, PCH01; INV1, PCH10, PCH11) are in closed condition, so that all capacitors are serially connected with one another, the lower terminal of the capacitor (C00; C10) of the first stage being connected to the supply voltage (Vpp) and the upper terminal of the capacitor of the N-th stage being connected to the output of the voltage multiplier;
**characterised in that** said logic circuitry further receives an enable signal (en) as an input signal; when the voltage multiplier is enabled (en = 1), the logic circuitry generates said control signals such that each mirrored section in alternated times is switched over from a charging phase to a discharging phase a rate determined by said clock signal (clk); and when the voltage multiplier is disabled (en = 0), the logic circuitry generates said control signals such that both mirrored sections of the circuit are in charging phase.

2. A voltage multiplier circuit for integrated circuits according to claim 1, **characterized in that** the first and the second switch of the first stage of each mirrored section are realized by means of a conventional CMOS inverter (INV0, INV1) so that said first switch is realized by means of a N-channel MOS transistor, having the source region connected to ground, the drain region connected to the lower terminal of the first stage capacitor (C00, C10) and the gate region connected to the line of said second control signal (PH0_P, PH1_P), said second switch is realized by a P-channel MOS transistor having the source region and the N-well in which the transistor is realized connected to the power supply voltage (Vpp), the drain region connected to the lower terminal of the first stage capacitor (C00, C10) and the gate region connected to the line of said second control signal (PH0_P, PH1_P).

3. A voltage multiplier circuit for integrated circuits according to claim 1, **characterized in that** all said first switches, except for the ones of the first stage of both mirrored sections, are realized by means of N-channel MOS transistors (NCH00, NCH01; NCH10, NCH11) having their source region connected to the line of said first control signals (PH01, PH11), their drain region connected to the lower terminal of the capacitor and their gate region connected to the power supply (Vpp).

4. A voltage multiplier circuit for integrated circuits according to claim 1, **characterized in that** all said second switches (PCH00, PCH01; PCH10, PCH11), except for the ones of the first stage of both mirrored sections, are realized by means of P-channel MOS transistors having their source region and the N well, in which the transistor is realized, connected to the upper terminal of the capacitor of the previous stage, their drain region connected to the lower terminal of the capacitor of their own stage, their gate region connected to the line of said second control signal (PH0_P, PH1_P).

5. A voltage multiplier circuit for integrated circuits according to claim 1, **characterized in that** all said third switches (NCH02, NCH03, NCH04; NCH12, NCH13, NCH14) are realized by means of N-channel MOS transistors, having their source region connected to the upper terminal of the capacitor, their drain region connected to the power supply voltage (Vpp) and their gate region connected to the upper terminal of one of the capacitors (C01, C11) of the other mirrored section of the circuit so as to enable a suitable voltage to be picked off from the discharging section for application to the gate regions of said MOS transistors in order to turn them fully on when they emulate a dosed switch.

6. A voltage multiplier circuit for integrated circuits according to claims 1 and 5, **characterized in that** each stage further includes a diode (NCH05, NCH06, NCH07;NCH15, NCH16, NCH17) having its anode connected to the power supply voltage (Vpp) and its cathode connected to the upper terminal of the capacitor in order to guarantee a pre-charge of the capacitors when the voltage multiplier is disabled (en = 0), said switches being in open condition due to the fact that they are realized by means of N-channel MOS transistors having their gate regions at a voltage not sufficient to turn them on because, since the voltage multiplier is disabled, both mirrored sections are in charging phase.

7. A voltage multiplier circuit for integrated circuits according to claims 1, 5 and 6, **characterized in that** said diodes (NCH05, NCH06, NCH07; NCH15, NCH16, NCH17) are realized by means of N-channel MOS transistors, having their source region connected to the upper terminal of the capacitor and their drain and gate regions both connected to the power supply voltage (Vpp).

8. A voltage multiplier circuit for integrated circuits according to claim 1, **characterized in that** said last switch (Q0; Q1) is realized by means of a diode having its anode connected to the upper terminal of the capacitor of the last stage and its cathode connected to the output of the voltage multiplied.

9. A voltage multiplier circuit for integrated circuits according to claims 1 and 8, **characterized in that** said diode is realized by means of a bipolar NPN transistor connected as a diode, having its base and its collector coupled to each other and operating as anode and having its emitter operating as cathode.

## Patentansprüche

1. Spannungsvervielfacherschaltung für integrierte Schaltungen, mit zwei gespiegelten Abschnitten, die durch Steuersignale (PH00, PH01, PH0_P; PH10, PH11, PH1_P) angesteuert sind, die von einer ein Taktsignal (clk) als Eingangssignal empfangenden Logikschaltung erzeugt werden, wobei jeder gespiegelte Abschnitt N Stufen und jede Stufe einen Kondensator (C00, C01, C02; C10, C11, C12) mit einem unteren Anschluß und einem oberen Anschluß enthält, wobei der untere Anschluß mit einem ersten Schalter (INV0, NCH00, NCH01; INV1, NCH10, NCH11) verbunden ist, der im geschlossenen Zustand den unteren Anschluß des Kondensators an Masse (GND) legt, wobei der untere Anschluß des Kondensators zusätzlich mit einem zweiten Schalter (INV0, PCH00, PCH01; INV1, PCH10, PCH11) verbunden ist, der im geschlossenen Zustand den unteren Anschluß des Kondensators an die Versorgungsspannung (Vpp) legt, soweit die erste Stufe betroffen ist, oder mit dem oberen Anschluß des Kondensators der vorhergehenden Stufe verbindet; wobei der obere Anschluß des Kondensators mit einem dritten Schalter (NCH02, NCH03, NCH04; NCH12, NCH13, NCH14) verbunden ist, der im geschlossenen Zustand den oberen Anschluß des Kondensators an die Versorgungsspannung (Vpp) legt, wobei der obere Anschluß des Kondensators (C02, C12) der letzten Stufe mit einem letzten zweipoligen Schalter (Q0; Q1) verbunden ist, der im geschlossenen Zustand den oberen Anschluß des Kondensators der letzten Stufe mit dem Ausgang des Spannungsvervielfachers verbindet; wobei die Steuersignale die Schaltcr direkt oder indirekt mit einer durch das Taktsignal (clk) bestimmten Frequenz steuern, wobei jeder gespiegelte Abschnitt in abwechselnden Zeitperioden von einer Ladephase in eine Entladephase umgeschaltet wird, so daß dann, wenn sich ein gespiegelter Abschnitt in der Ladephase befindet, der andere sich in der Entladephase befindet und umgekehrt; wobei dann, wenn sich ein gespiegelter Abschnitt in der Ladephase befindet, der letzte Schalter (Q0; Q1) und alle seine zweiten Schalter (INV0, PCH00, PCH01; INV1, PCH10, PCH11) den offenen Zustand haben, während seine ersten (INV0, NCH00, NCH01; INV1, NCH10, NCH11) und seine dritten Schalter (NCH02, NCH03, NCH04; NCH12, NCH13, NCH14) den geschlossenen Zustand haben, so daß alle Kondensatoren in diesem Schaltungsabschnitt parallel zwischen der Versorgungsspannung (Vpp) und Masse (GND) liegen und auf die Versorgungsspannung (Vpp) aufgeladen werden; wobei dann, wenn sich ein gespiegelter Abschnitt der Schaltung in der Entladephase befindet alle seine ersten (INV0, NCH00, NCH01; INV1, NCH10, NCH11) und dritten Schalter (NCH02, NCH03, NCH04; NCH12, NCH13, NCH14) den offenen Zustand haben, während sein letzter Schalter (Q0; Q1) und alle seine zweiten Schalter (INV0, PCH00, PCH01; INV1, PCH10, PCH11) den geschlossenen Zustand haben, so daß alle Kondensatoren in Serie zueinander liegen, wobei der untere Anschluß des Kondensators (C00; C10) der ersten Stufe an die Versorgungsspannung (Vpp) gelegt ist und der untere Anschluß des Kondensators der N-ten Stufe mit dem Ausgang des Spannungsvervielfachers verbunden ist;
**dadurch gekennzeichnet, daß** die Logikschaltung außerdem ein Freigabesignal (en) als Eingangssignal empfängt, wenn der Spannungsvervielfacher freigegeben ist (en = 1), wobei die Logikschaltung das Steuersignal so erzeugt, daß jeder gespiegelte Abschnitt in abwechselnden Zeitperioden von ciner Ladephase in eine Entladephase mit einer von dem Taktsignal (clk) zur bestimmten Frequenz umgeschaltet wird, während dann, wenn der Spannungsvervielfacher deaktiviert ist (en = 0), die Logikschaltung das Steuersignal so erzeugt, daß sich beide gespiegelten Abschnitte der Schaltung in der Ladephase befinden.

2. Spannungsvervielfacherschaltung für integrierte Schaltungen nach Anspruch 1, **dadurch gekennzeichnet, daß** der erste und der zweite Schalter jedes gespiegelten Abschnitts mit Hilfe eines herkömmlichen CMOS-Negators (INV0, INV1) verwirklicht sind, so daß der erste Schalter als N-Kanal-MOS-Transistor ausgeführt ist, dessen Source-Zone mit Masse verbunden ist, dessen Drain-Zone mit dem unteren Anschluß des Kondensators (C00, C10) der ersten Stufe verbunden ist und dessen Gate-Zone mit der Leitung des zweiten Steuersignals (PH0_P, PH1_P) verbunden ist, während der zweite Schalter als P-Kanal-MOS-Transistor ausgeführt ist, dessen Source-Zone und die N-Wanne, in der der Transistor gebildet ist, an die Versorgungsspannung (Vpp) gelegt sind, dessen Drain-Zone mit dem unteren Anschluß des Kondensators (C00, C10) der ersten Stufe verbunden ist und dessen Gate-Zone mit der Leitung des zweiten Steuersignals (PH0_P, PH1_P) verbunden ist.

3. Spannungsvervielfacherschaltung für integrierte Schaltungen nach Anspruch 1, **dadurch gekennzeichnet, daß** alle ersten Schaltcr mit Ausnahme der der ersten Stufe beider gespiegelten Abschnitte als N-Kanal-MOS-Transistoren (NCH00, NCH01; NCH10, NCH11) ausgeführt sind, deren Source-Zone mit der Leitung des ersten Stcuersignals (PH01, PH11) verbunden ist, deren Drain-Zone mit dem unteren Anschluß des Kondensators verbunden ist und dessen Gate-Zone an die Versorgungsspannung (Vpp) gelegt ist.

4. Spannungsvervielfacherschaltung für integrierte Schaltungen nach Anspruch 1, **dadurch gekennzeichnet, daß** alle zweiten Schalter (PCH00, PCH01;PCH10, PCH11) mit Ausnahme der der ersten Stufe der beiden gespiegelten Abschnitte als P-Kanal-MOS-Transistoren ausgeführt sind, deren Source-Zone und N-Wanne, in der der Transistor gebildet ist, mit dem oberen Anschluß des Kondensators der vorhergehenden Stufe verbunden ist, deren Drain-Zone mit dem unteren Anschluß des Kondensators ihrer eigenen Stufe verbunden ist und deren Gate-Zone mit der Leitung des zweiten Steuersignals (PH0_P, PH1_P) verbunden ist.

5. Spannungsvervielfacherschaltung für integrierte Schaltungen nach Anspruch 1, **dadurch gekennzeichnet, daß** alle dritten Schalter (NCH02, NCH03, NCH04; NCH12, NCH13, NCH14) als N-Kanal-MOS-Transistoren ausgeführt sind, deren Source-Zone mit dem oberen Anschluß des Kondensators verbunden ist, deren Drain-Zone an die Versorgungsspannung (Vpp) gelegt ist und deren Gate-Zone mit dem oberen Anschluß eines der Kondensatoren (C01, C11) des anderen gespiegelten Abschnitts der Schaltung verbunden ist, so daß eine geeignete Spannung vom Entladeabschnitt zum Anlegen an die Gate-Zonen der MOS-Transistoren abgegriffen werden kann, damit sie voll durchgeschaltet werden, wenn sie einen geschlossenen Schalter emulieren.

6. Spannungsvervielfacherschaltung für integrierte Schaltungen nach den Ansprüchen 1 und 5, **dadurch gekennzeichnet, daß** jede Stufe ferner eine Diode (NCH05, NCH06, NCH07; NCH15, NCH16, NCH17) enthält, deren Anode an die Versorgungsspannung (Vpp) gelegt ist und deren Kathode mit dem oberen Anschluß des Kondensators verbunden ist, damit ein Vorladen der Kondensatoren gewährleistet wird, wenn der Spannungsvervielfacher deaktiviert ist (en = 0), wobei die Schalter aufgrund der Tatsache den offenen Zustand haben, daß sie mit Hilfe von N-Kanal-MOS-Transistoren verwirklicht sind, deren Gate-Zonen an eine Spannung gelegt sind, die nicht ausreicht, sie durchzuschalten, da wegen des deaktivierten Zustandes des Spannungsvervielfachers die sich beide gespiegelten Abschnitte in der Ladephase befinden.

7. Spannungsvervielfacherschaltung für integrierte Schaltungen nach den Ansprüchen 1, 5 und 6, **dadurch gekennzeichnet, daß** die Dioden (NCH05, NCH06, NCH07; NCH15, NCH16, NCH17) durch N-Kanal-MOS-Transistoren gebildet sind, deren Source-Zonen mit dem oberen Anschluß des Kondensators verbunden sind und deren Drain- und Gate-Zonen beide an die Versorgungsspannung (Vpp) gelegt sind.

8. Spannungsvervielfacherschaltung für integrierte Schaltungen nach Anspruch 1, **dadurch gekennzeichnet, daß** der letzte Schalter (Q0; Q1) durch eine Diode gebildet ist, deren Anode mit dem oberen Anschluß des Kondensators der letzten Stufe verbunden ist und deren Kathode mit dem Ausgang des Spannungsvervielfachers verbunden ist.

9. Spannungsvervielfacherschaltung für integrierte Schaltungen nach den Ansprüchen 1 und 8, **dadurch gekennzeichnet, daß** die Diode durch einen bipolaren NPN-Transistor gebildet ist, der als Diode geschaltet ist, wobei seine Basis und sein Kollektor miteinander verbunden sind und als Anode wirken, während sein Emitter als Kathode wirkt.

## Revendications

1. Un multiplicateur de voltage pour circuits intégrés, comprenant deux sections spéculaires commandées par signals de contrôle (PH00, PH01, PHC_P, PH10, PH11, PH1_P) engendrés par des connections logiques, qui recoivent un signal cadencé (clk) comme un signal d'entré, dans lequel chaque section spéculaires comprend N étages et chaque étage comprende un condensateur (C00, C01, C02; C10, C11, C12) ayant une borne inférieure et une borne supérieure, la borne inférieure est jointe à un premier interrupteur (INV0, NCH00, NCH01; INV1, NCH10, NCH11), qui, en position, de fermeture, accouple la borne inférieure du condensateur à la masse, ladite borne inférieure étant de plus jointe à un deuxième interrupteur (INV0, PCH00, PCH01; INV1, PCH10, PCH11), qui, en position de fermeture, accouple la borne inférieure du condensateur au voltage d'alimentation (Vpp), la borne supérieure du condensateur (C02; C12) due dernier étage est jointe à un interrupteur ayant au moins deux bornes (Q0; Q1), qui, en position de fermeture, accouple la borne supérieure du condensateur du dernier étage à la sortie du multiplicateur de voltage, lesdits signals de contrôle comadent directement ou indirectement lesdits interrupteurs à une cadence déterminée par ledit signal cadencé (clk), chaque section spéculaire est commuée, en temps alternés, d'une phase de charge à une phase de décharge et vice versa; quand une section spéculaire du circuit sa trouve en phase de décharge, la dernier interrupteur (Q0; Q1) et tous ses deuxièmes interrupteurs (INV0, PCH00, PCH01; INV1, PCH10, PCH11) sont en position d'ouverture, pendant que ses premiers (INV0, NCH00, NCH01; INV1, NCH10, NCH11) et ses troisièmes interrupteurs (NCH02, NCH05, NCH04, NCH12, NCH13, NCH14) sont en position de fermeture, de façon que tous le condensateurs de cette section du circuit sont joints en parallel entre ledit voltage d'alimentation (Vpp) et la masse (GND) et sont chargés jusq'audit voltage d'alimentation; quand une section spéculaire du circuit se trouve en phase de décharge, tous ses premiers (INV0, NCH00, NCH01; INV1, NCH10, NCH11) et troisièmes interrupteurs ((NCH02, NCH03, NCH04; NCH12, NCH13, NCH14) sont en position d'ouverture, parce que son dernier interrupteur (Q0, Q1) et ses deuxièmes interrupteurs (INV0; PCH00, PCH01; INV1, PCH10, PCH11) sont en position de fermeture, de façon que tous les condensateurs sont joints en serie l'un avec l'autre, la borne inférieure du condensateur (C00; C10) du première étage etant jointe au voltage d'alimentation (Vpp) et la borne supérieure du condensateur du N-me étage étant jointe à la sortie du multiplicateur de voltage;
**caractérisé en ce que** lesdites connexions logiques recoivent en outre un signal d'aptitude (en) comme un signal de sortie quand le multiplicateur est habilité (en=1), le connexions logiques engendrent ledit signal de contrôle, de façon que chaque section spéculaire est commuée, en temps alternés, d'une phase de charge à une phase de décharge à une cadence déterminée par ledit signal cadencé (clk) et quand le multiplicateur de voltage est inhabilité (en=o) les connexions logiques engendrent ledit signal de contrôle, de façon que les deux sections spéculaires du circuit se trouvent en phase de charge.

2. Un multiplicateur de voltage pour circuits intégré selon la revendication 1, **caractérisé en ce que** le premier et le deuxième interrupteur de la première phase de chaque section spéculaire sont réalisés au moyen d'un conventionnel inverseur CMOS (INV0, INV1), de façon que ledit premier interrupteur est réalisé au moyen d'un trasistor MOS à N canal, ayant la région de source jointe à la masse, la région de décharge jointe à la borne inférieure du première phase (C00, C10) et la région d'entrée jointe à la ligne dudit deuxième signal de contrôl (PH0-P, PH1_P), ledit deuxième interrupteur est réalisé au moyen d'un transistor MOS à P canal, ayant la région de source et le puits N, dans lequel le transistor est réalisé joints à le voltage d'alimentation (Vpp), la région de décharge (drain) jointe à la borne inférieure du condensateur de première phase (C00, C10) et la région d'entrée (gate) jointe à la ligne dudit deuxième signal de contrôl (PH0_P, PH1_P).

3. Un multiplicateur de voltage pour circuits intégré selon la revendication 1, **caractérisé en ce que** tous lesdits premiers interrupteurs, sauf ces des premiers étages des deux section spéculaires, sont réalisés au moyen des transistor MOS à N canal (NCH00, NCH01; NCH10, NCH11) ayants leur région de source joints à la ligne desdits premiers signals de contrôle (PH01, PH11), la leur région de décharge (drain) jointe à la borne inférieure du condensateur et la leur région d'entrée (gate) jointe à l'alimentation de puissance.

4. Un multiplicateur de voltage pour circuits intégré selon la revendication 1, **caractérisé en ce que** tous lesdits deuxièmes interrupteurs (PCH00, PCH01; PCH10, PCH11), sauf ces des premiers * étages, sont réalisés au moyen des transistors MOS à P canal, ayant leur région de source et le puits N, dans lequel est réalisé le transistor, jointe à la borne supérieure du condensateur d'étage précédent, la leur région de décharge jointe à la borne inférieure du condensateur de leur propre étage, la leur région d'entrée jointe à la ligne dudit deuxième signal de contrôle (PH0_P, PH1_P).

5. Un multiplicateur de voltage pour circuits intégré selon la revendication 1, **caractérisé en ce que** tous lesdits troixième interrupteurs (NCH02, NCH03, NCH04; NCH12, NCH13, NCH14) sont réalisés au moyen des transistors MOS à canal N, ayants la leut région de source jointe à la borne supérieure du condensateur, la leur région de décharge jointe au voltage d'alimentation de puissance (Vpp) et la leur région d'entrée jointe à la borne supérieurs d'un des condensateurs (C01, C11) de l'autre section spéculaire du circuit, de façon à habiliter un voltage approprié d'être pris de la section de décharge et appliqué à les régions d'entrée dudits transistors MOS pour commuer les mêmes complètement quand ils rivalisent un interrupteur fermé.

6. Un multiplicateur de voltage pour circuits intégré selon les revendications 1 et 5, **caractérisé en ce que** chaque étage comprend en outre une diode (NCH05, NCH06, NCH07; NCH15, NCH16, NCH17) ayant sa anode jointe au voltage d'alimentation de puissance (Vpp) et sa cathode jointe à la borne supérieure du condensateur pour garantir une précharge des condensators quand le multiplicateur de voltage est inhabilité (en=0), lesdits interrupteurs étant en position de ouverture, en tant que ils sont réalisés au moyen des transistors MOS à canal N ayant leur régions d'entrée à un voltage insuffisant pour commuer les mêmes, car, comme le multiplicateur est inhabilité, tous les deux sections spéculaires se trouvent en phase de chargement.

7. Un multiplicateur de voltage pour circuits intégré selon les revendications 1, 5 et 6, **caractérisé en ce que** lesdites diodes (NCH05, NCH06, NCH07; NCH15, NCH16, NCH17) sont réalisés au moyen des transistors MOS à N canal, ayants leur régions de source jointes à la borne supérieur du condensateur et les leur régions de décharge (drain) e d'entrée (gate) jointes toutes les deux au voltage d'alimentation de puissance (Vpp).

8. Un multiplicateur de voltage pour circuits intégré selon la revendication 1, **caractérisé en ce que** ledit dernier interrupteur (Q0; Q1) est réalisé au moyen d'une diode ayant sa anode jointe à la borne supérieure du condensateur du dernier étage et sa cathode jointe à la sortie du multiplicateur de voltage.

9. Un multiplicateur de voltage pour circuits intégré selon les revendications 1 et 8, **caractérisé en ce que** ledit diode est réalise au moyen d'un transistor NPN bipolaire, joint comme une diode, ayant sa base et son collecteur accouplés l'une à l'autre et functionnant comme anode et ayant son émetteur functionnant comme cathode.
